# EUROPEAN PATENT APPLICATION

(11) **EP 4 583 567 A1**
(43) Date of publication of application: **09.07.2025**
(21) Application number: 23887937.3
(22) Date of filing: 06.11.2023
(51) Int. Cl.: H04W 24/04

(54) **INFORMATION PROCESSING METHOD AND RELATED DEVICE**

(30) Priority: 11.11.2022 CN 202211414930
(71) Applicant: Huawei Technologies Co., Ltd., Shenzhen, Guangdong 518129 (CN)
(72) Inventor: ZHOU, Weijian, Shenzhen, Guangdong 518129 (CN); YU, Ming, Shenzhen, Guangdong 518129 (CN); WANG, Shanshan, Shenzhen, Guangdong 518129 (CN); YANG, Yongjun, Shenzhen, Guangdong 518129 (CN); SHI, Tianlong, Shenzhen, Guangdong 518129 (CN); PENG, Zhi, Shenzhen, Guangdong 518129 (CN); SHUAI, Lingliang, Shenzhen, Guangdong 518129 (CN)
(74) Representative: Grünecker Patent- und Rechtsanwälte PartG mbB
(86) International application number: PCT/CN2023/129847
(87) International publication number: WO 2024/099247

(57) **Abstract**

This application provides an information processing method and a related device, to simplify an operation and maintenance process of a communication network, and reduce operation and maintenance costs. In the method, a first device obtains first information, where the first information indicates performance of one or more services carried on a network resource. The first device determines second information based on the first information, where the second information indicates quality of the one or more services. Therefore, when the second information determined by the first device can indicate the quality of the service carried on the network resource, a user of a communication device can perceive an execution status of the service based on the second information, to simplify the operation and maintenance process of the communication network, and reduce the operation and maintenance costs.

## Description

This application claims priority to Chinese Patent Application No. 202211414930.2, filed with the China National Intellectual Property Administration on November 11, 2022 and entitled "INFORMATION PROCESSING METHOD AND RELATED DEVICE", which is incorporated herein by reference in its entirety.

### TECHNICAL FIELD

This application relates to the field of communication technologies, and in particular, to an information processing method and a related device.

### BACKGROUND

In a communication network, communication roles usually include a terminal device and a network device. A communication process between different terminal devices usually depends on signal processing performed by one or more network devices on a wireless signal and/or a wired signal.

Currently, a user of a communication device usually has no network operation and maintenance capability. A to consumer (to consumer, to C for short) communication scenario is used as an example. Because a user of a communication device is usually an individual user, in a communication process, the individual user mainly focuses on user experience obtained based on the communication device, and does not care about operation of a communication network. In this case, operation and maintenance of the communication network is usually implemented by a network operator.

However, in a future communication system, due to factors such as communication security considerations or geographical location limitations (for example, in a to business (to business, to B for short) communication scenario), a part or all of operation and maintenance of a communication network may need to be performed by a user of a communication device, and the user of the communication device usually has no professional operation and maintenance capability.

Therefore, how to simplify an operation and maintenance process of a communication network is an urgent technical problem to be resolved.

### SUMMARY

This application provides an information processing method and a related device, to simplify an operation and maintenance process of a communication network, and reduce operation and maintenance costs.

A first aspect of this application provides an information processing method. The method is performed by a first device, the method is performed by some components (for example, a processor, a chip, or a chip system) in the first device, or the method may be implemented by a logical module or software that can implement all or some functions of the first device. In the first aspect and a possible implementation of the first aspect, an example in which the information processing method is performed by the first device is used for description. The first device may be a server, a virtual machine, a container, or the like. In the method, the first device obtains first information, where the first information indicates performance of one or more services carried on a network resource. The first device determines second information based on the first information, where the second information indicates quality of the one or more services.

According to the foregoing technical solution, after the first device obtains the first information that indicates the performance of the one or more services carried on the network resource, the first device determines, based on the first information, the second information including the quality of the one or more services carried on the network resource. In other words, the first device can determine, based on performance information of the one or more services carried on the network resource, the quality of the service carried on the network resource. Therefore, when the second information provided by the first device can indicate the quality of the service carried on the network resource, a user of a communication device can perceive an execution status of the service based on the second information, to simplify an operation and maintenance process of a communication network, and reduce operation and maintenance costs.

In this application, the first information indicates the performance of the one or more services carried on the network resource. The first information may be referred to as performance information, a key performance indicator (key performance indicator, KPI), or another description. This is not limited herein.

In this application, the second information indicates the quality of the one or more services, and the second information may carry quality information, a key quality indicator (key quality indicator, KQI), or another description. This is not limited herein.

A second aspect of this application provides an information processing method. The method is performed by a first device, the method is performed by some components (for example, a processor, a chip, or a chip system) in the first device, or the method may be implemented by a logical module or software that can implement all or some functions of the first device. In the second aspect and a possible implementation of the second aspect, an example in which the information processing method is performed by the first device is used for description. The first device may be a server, a virtual machine, a container, or the like. In the method, the first device obtains first information and third information, where the first information indicates performance of one or more services carried on a network resource, and the third information indicates an intent for a network. The first device determines fourth information based on the first information and the third information, where the fourth information indicates achievement information of the performance of the one or more services.

According to the foregoing technical solution, after the first device obtains the first information that indicates the performance of the one or more services carried on the network resource and the third information that indicates the intent for the network, the first device determines, based on the first information and the third information, the fourth information that indicates the achievement information of the performance of the one or more services. In other words, the first device can determine, based on performance information of the one or more services carried on the network resource and the intent for the network, the achievement information of the performance of the service carried on the network resource. Therefore, when the fourth information determined by the first device can indicate the achievement information of the performance of the service, a user of a communication device can perceive an execution status of the service based on the intent, to simplify an operation and maintenance process of a communication network, and reduce operation and maintenance costs.

Optionally, the achievement information of the performance of the service includes at least one of the following: whether the performance of the service is achieved, an achievement proportion of the performance of the service, and a non-achievement proportion of the performance of the service.

It may be understood that the intent in this application indicates an expectation for a network system, including a requirement, a target, a constraint, and the like.

Optionally, the network system is a 3rd generation partnership project (3rd generation partnership project, 3GPP) system.

A third aspect of this application provides an information processing method. The method is performed by a first device, the method is performed by some components (for example, a processor, a chip, or a chip system) in the first device, or the method may be implemented by a logical module or software that can implement all or some functions of the first device. In the third aspect and a possible implementation of the third aspect, an example in which the information processing method is performed by the first device is used for description. The first device may be a server, a virtual machine, a container, or the like. In the method, the first device obtains fourth information, where the fourth information indicates achievement information of performance of one or more services carried on a network resource. The first device determines fifth information based on the fourth information, where the fifth information indicates overall achievement information of the one or more services.

According to the foregoing technical solution, after the first device obtains the fourth information that indicates the achievement information of the performance of the one or more services, the first device determines, based on the fourth information, the fifth information that indicates the overall achievement information of the one or more services. In other words, the first device can further determine the overall achievement information of the one or more services based on the achievement information of the performance of the service. Therefore, when the fifth information determined by the first device can indicate the overall achievement information of the one or more services, a user of a communication device can perceive an overall execution status of the service based on an intent, to simplify an operation and maintenance process of a communication network, and reduce operation and maintenance costs.

Optionally, the overall achievement information of the one or more services includes at least one of the following: whether overall performance of the one or more services is achieved, an achievement proportion of the overall performance of the one or more services, and a non-achievement proportion of the overall performance of the one or more services.

A fourth aspect of this application provides an information processing method. The method is performed by a first device, the method is performed by some components (for example, a processor, a chip, or a chip system) in the first device, or the method may be implemented by a logical module or software that can implement all or some functions of the first device. In the fourth aspect and a possible implementation of the fourth aspect, an example in which the information processing method is performed by the first device is used for description. The first device may be a server, a virtual machine, a container, or the like. In the method, the first device obtains fifth information, where the fifth information indicates overall achievement information of one or more services carried on a network resource. The first device determines sixth information based on the fifth information, where the sixth information indicates overall achievement information of an intent for a network.

According to the foregoing technical solution, after the first device obtains the fifth information that indicates the overall achievement information of the one or more services, the first device determines, based on the fifth information, the sixth information that indicates the overall achievement information of the intent for the network. In other words, the first device can further determine the overall achievement information of the intent for the network based on the overall achievement information of the service. Therefore, when the sixth information determined by the first device can indicate the overall achievement information of the intent for the network, a user of a communication device can manage/maintain a communication network based on the intent, to simplify an operation and maintenance process of the communication network, and reduce operation and maintenance costs.

Optionally, the overall achievement information of the intent for the network includes at least one of the following: whether the intent for the network is achieved as a whole, an overall achievement proportion of the intent for the network, and an overall non-achievement proportion of the intent for the network.

A fifth aspect of this application provides an information processing method. The method is performed by a first device, the method is performed by some components (for example, a processor, a chip, or a chip system) in the first device, or the method may be implemented by a logical module or software that can implement all or some functions of the first device. In the fifth aspect and a possible implementation of the fifth aspect, an example in which the information processing method is performed by the first device is used for description. The first device may be a server, a virtual machine, a container, or the like. In the method, the first device obtains sixth information, fourth information, first information, third information, and seventh information, where the sixth information indicates overall achievement information of an intent for a network, the fourth information indicates achievement information of performance of one or more services, the first information indicates the performance of the one or more services carried on a network resource, the third information indicates the intent for the network, and the seventh information indicates a resource status of the network. The first device determines fault information of a first service based on the sixth information, the fourth information, the first information, the third information, and the seventh information, where the first service is an unachieved service in the one or more services.

According to the foregoing technical solution, after the first device obtains the sixth information, the fourth information, the first information, the third information, and the seventh information, the first device can further determine, based on the obtained information by using a correspondence between intent-related information and service-related information, the fault information of the first service that is not achieved, to locate and analyze a fault of the unachieved service. In this way, a user of a communication device can manage/maintain a communication network based on the intent-related information and the service-related information, to simplify an operation and maintenance process of the communication network, and reduce operation and maintenance costs.

In a possible implementation of any one of the foregoing aspects, the network in the foregoing technical solution includes a first network or N subnetworks in the first network, where N is a positive integer.

Optionally, the N subnetworks include at least one of the following: one or more radio access network (radio access network, RAN) subnetworks, one or more core network (core network, CN) subnetworks, one or more transmission network (transmission network, TRAN or TN for short) subnetworks, or one or more terminal (terminal) subnetworks.

According to the foregoing technical solution, the network resource may include network resources of a plurality of layers. Therefore, the N subnetworks may include one or more of the RAN subnetwork, the CN subnetwork, the TRAN subnetwork, and the terminal subnetwork, to improve flexibility of network resource deployment.

A sixth aspect of this application provides an information processing method. The method is performed by a first device, the method is performed by some components (for example, a processor, a chip, or a chip system) in the first device, or the method may be implemented by a logical module or software that can implement all or some functions of the first device. In the sixth aspect and a possible implementation of the sixth aspect, an example in which the information processing method is performed by the first device is used for description. The first device may be a server, a virtual machine, a container, or the like. In the method, the first device determines a first mapping relationship, where the first mapping relationship indicates a mapping relationship between a fixed identifier and a temporary identifier that are of one or more services. The first device determines related information about the one or more services based on the first mapping relationship.

According to the foregoing technical solution, when a data flow of the one or more services is actually transmitted in a network, the data flow is generally indicated by the temporary identifier. Therefore, when the first mapping relationship obtained by the first device indicates the mapping relationship between the fixed identifier and the temporary identifier that are of the one or more services, the first device may determine the temporary identifier of the one or more services based on the first mapping relationship, so that the first device can further obtain, based on the temporary identifier of the one or more services, service-related information that is of the one or more services and that is actually transmitted in the network. In this way, an execution status of the service is perceived, to simplify an operation and maintenance process of a communication network, and reduce operation and maintenance costs.

Optionally, the related information about the service may include first information that indicates performance of the one or more services carried on a network resource, second information that indicates quality of the one or more services, fourth information that indicates achievement information of the performance of the one or more services, and other service-related information that may exist. This is not limited herein.

In a possible implementation of the sixth aspect, the method further includes: The first device receives indication information that indicates the first mapping relationship.

It may be understood that the first device may obtain, in a plurality of manners, the indication information that indicates the first mapping relationship. For example, the first device may locally maintain the indication information that indicates the first mapping relationship, or the first device may obtain, in a manner of receiving user input information through an input/output interface, the indication information that indicates the first mapping relationship. This is not limited herein.

In a possible implementation of the sixth aspect, the method further includes: The first device sends eighth information, where the eighth information indicates the temporary identifier of the one or more services. The first device receives ninth information, where the ninth information indicates the fixed identifier of the one or more services. The first device determines the first mapping relationship based on the eighth information and the ninth information.

According to the foregoing technical solution, when the first mapping relationship is maintained by a second device (for example, a core network device or a management/control device of the core network device), after the first device sends, to the second device, the eighth information that indicates the temporary identifier of the one or more services, the first device may receive, from the second device, the ninth information that indicates the fixed identifier of the one or more services, so that the first device can clearly determine the mapping relationship between the temporary identifier and the fixed identifier, and further determine, based on the mapping relationship, service information of the one or more services carried on the network resource.

It may be understood that, in any possible implementation of any one of the foregoing aspects, the first device may obtain the foregoing information (including one or more of the first information to the seventh information, or other indication information) in a plurality of manners. For example, the first device may receive the foregoing information sent by another device; the first device may obtain the foregoing information in a pre-configuration (or default configuration) manner; or the first device may obtain the foregoing information in a manner of receiving the user input information through the input/output interface. This is not limited herein.

A seventh aspect of this application provides an information processing method. The method is performed by a second device, the method is performed by some components (for example, a processor, a chip, or a chip system) in the second device, or the method may be implemented by a logical module or software that can implement all or some functions of the second device. In the seventh aspect and a possible implementation of the seventh aspect, an example in which the information processing method is performed by the second device is used for description. The second device may be a network device (for example, a core network device), or the second device may be a management/control device of the network device (for example, the core network device), for example, a server, a virtual machine, or a container.

In the method, the second device receives eighth information, where the eighth information indicates a temporary identifier of one or more services. The second device sends ninth information, where the ninth information indicates a fixed identifier of the one or more services.

Alternatively, in the method, the second device determines a first mapping relationship, and the second device sends the first mapping relationship, where the first mapping relationship indicates a mapping relationship between a fixed identifier and a temporary identifier that are of one or more services, and the first mapping relationship determines related information about the one or more services.

According to the foregoing technical solution, after the second device receives the eighth information that indicates the temporary identifier of the one or more services, the second device may send the ninth information that indicates the fixed identifier of the one or more services, so that the first device clearly determines the first mapping relationship based on the ninth information (or the first device can receive the first mapping relationship when the second device sends the first mapping relationship), and the first device can further obtain service-related information that is about the one or more services and that is actually transmitted in a network, to perceive an execution status of the service, to simplify an operation and maintenance process of a communication network, and reduce operation and maintenance costs.

An eighth aspect of this application provides a communication apparatus. The apparatus is disposed in a first device, and the apparatus may implement the method according to any one of the first aspect or the possible implementations of the first aspect. The apparatus includes a corresponding unit or module configured to perform the foregoing method. The unit or module included in the apparatus may be implemented by software and/or hardware. For example, the apparatus may be the first network, or the apparatus may be a component (for example, a processor, a chip, or a chip system) in the first network, or the apparatus may be a logical module or software that can implement all or some functions of the first device. The apparatus includes a processing unit.

In a possible implementation, the processing unit is configured to obtain first information, where the first information indicates performance of one or more services carried on a network resource. The processing unit is further configured to determine second information based on the first information, where the second information indicates quality of the one or more services.

In a possible implementation, the processing unit is configured to obtain first information and third information, where the first information indicates performance of one or more services carried on a network resource, and the third information indicates an intent for a network. The processing unit is further configured to determine fourth information based on the first information and the third information, where the fourth information indicates achievement information of the performance of the one or more services.

In a possible implementation, the processing unit is configured to obtain fourth information, where the fourth information indicates achievement information of performance of one or more services carried on a network resource. The processing unit is further configured to determine fifth information based on the fourth information, where the fifth information indicates overall achievement information of the one or more services.

In a possible implementation, the processing unit is configured to obtain fifth information, where the fifth information indicates overall achievement information of one or more services carried on a network resource. The processing unit is further configured to determine sixth information based on the fifth information, where the sixth information indicates overall achievement information of an intent for a network.

In a possible implementation, the processing unit is configured to obtain sixth information, fourth information, first information, third information, and seventh information, where the sixth information indicates overall achievement information of an intent for a network, the fourth information indicates achievement information of performance of one or more services, the first information indicates the performance of the one or more services carried on a network resource, the third information indicates the intent for the network, and the seventh information indicates a resource status of the network. The processing unit is further configured to determine fault information of a first service based on the sixth information, the fourth information, the first information, the third information, and the seventh information, where the first service is an unachieved service in the one or more services.

In a possible implementation, the processing unit is configured to determine a first mapping relationship, where the first mapping relationship indicates a mapping relationship between a fixed identifier and a temporary identifier that are of one or more services. The processing unit is further configured to determine related information about the one or more services based on the first mapping relationship.

In the eighth aspect of embodiments of this application, the composition modules of the communication apparatus may be further configured to perform steps performed in the possible implementations of the first aspect to the sixth aspect, and achieve corresponding technical effects. For details, refer to related descriptions of the first aspect to the sixth aspect. Details are not described herein again.

A ninth aspect of this application provides a communication apparatus. The apparatus is disposed in a second device, and the apparatus may implement the method according to any one of the seventh aspect or the possible implementations of the seventh aspect. The apparatus includes a corresponding unit or module configured to perform the foregoing method. The unit or module included in the apparatus may be implemented by software and/or hardware. For example, the apparatus may be the second device, or the apparatus may be a component (for example, a processor, a chip, or a chip system) in the second device, or the apparatus may be a logical module or software that can implement all or some functions of the second device. The apparatus includes a processing unit and a transceiver unit.

In a possible implementation, the transceiver unit is configured to receive fifth information, where the fifth information indicates a fixed identifier of the one or more services. The processing unit is configured to determine sixth information, where the sixth information indicates a temporary identifier of the one or more services. The transceiver unit is further configured to send the sixth information.

In a possible implementation, the processing unit is configured to determine a first mapping relationship, and the transceiver unit is configured to send the first mapping relationship, where the first mapping relationship indicates a mapping relationship between a fixed identifier and a temporary identifier that are of one or more services, and the first mapping relationship determines related information about the one or more services.

In the ninth aspect of embodiments of this application, the composition modules of the communication apparatus may be further configured to perform steps performed in the possible implementations of the seventh aspect, and achieve corresponding technical effects. For details, refer to the seventh aspect. Details are not described herein again.

A tenth aspect of embodiments of this application provides a communication apparatus, including at least one processor. The at least one processor is coupled to a memory. The memory is configured to store a program or instructions. The at least one processor is configured to execute the program or the instructions, to enable the apparatus to implement the method according to any one of the possible implementations of the first aspect to the seventh aspect.

An eleventh aspect of embodiments of this application provides a communication apparatus, including at least one logic circuit and an input/output interface. The logic circuit is configured to perform the method according to any one of the possible implementations of the first aspect to the seventh aspect.

A twelfth aspect of embodiments of this application provides a computer-readable storage medium storing one or more computer-executable instructions. When the computer-executable instructions are executed by a processor, the processor performs the method according to any one of the possible implementations of the first aspect to the seventh aspect.

A thirteenth aspect of embodiments of this application provides a computer program product (or referred to as a computer program) storing one or more computers. When the computer program product is executed by a processor, the processor performs the method according to any one of the possible implementations of the first aspect to the seventh aspect.

A fourteenth aspect of embodiments of this application provides a chip system. The chip system includes at least one processor, and the processor is configured to support a first communication apparatus in implementing a function in any one of the possible implementations of the first aspect to the seventh aspect.

In a possible design, the chip system may further include a memory. The memory is configured to store program instructions and data that are necessary for the first communication apparatus. The chip system may include a chip, or may include a chip and another discrete component. Optionally, the chip system further includes an interface circuit, and the interface circuit provides program instructions and/or data for the at least one processor.

A fifteenth aspect of embodiments of this application provides a communication system. The communication system includes the communication apparatus according to the eighth aspect and/or the communication apparatus according to the ninth aspect, and/or the communication system includes the communication apparatus according to the tenth aspect, and/or the communication system includes the communication apparatus according to the eleventh aspect.

For technical effects achieved by any design manner of the eighth aspect to the fifteenth aspect, refer to technical effects achieved by different implementations of the first aspect to the seventh aspect. Details are not described herein again.

### BRIEF DESCRIPTION OF DRAWINGS

FIG. 1 is a diagram of a communication system according to this application;
FIG. 2 is a diagram of an information processing method according to this application;
FIG. 3 is another diagram of an information processing method according to this application;
FIG. 4 is another diagram of an information processing method according to this application;
FIG. 5 is another diagram of an information processing method according to this application;
FIG. 6 is another diagram of an information processing method according to this application;
FIG. 7 is another diagram of an information processing method according to this application;
FIG. 8a is a diagram of an implementation of an information processing method according to this application;
FIG. 8b is a diagram of another implementation of an information processing method according to this application;
FIG. 8c is a diagram of another implementation of an information processing method according to this application;
FIG. 8d is a diagram of another implementation of an information processing method according to this application;
FIG. 9a is a diagram of another implementation of an information processing method according to this application;
FIG. 9b is a diagram of another implementation of an information processing method according to this application;
FIG. 10 is a diagram of a communication apparatus according to this application;
FIG. 11 is a diagram of another communication apparatus according to this application;
FIG. 12 is a diagram of another communication apparatus according to this application; and
FIG. 13 is a diagram of another communication apparatus according to this application.

### DESCRIPTION OF EMBODIMENTS

The following describes technical solutions of this application with reference to the accompanying drawings in this application. All other solutions obtained by a person of ordinary skill in the art based on this application without creative efforts shall fall within the protection scope of this application.

Some terms in this application are first described, to facilitate understanding of a person skilled in the art.
(1) Terminal device: The terminal device may be a wireless terminal device that can receive scheduling and indication information of a network device. The wireless terminal device may be a device that provides a user with voice and/or data connectivity, or a handheld device with a wireless connection function, or another processing device connected to a wireless modem.
   The terminal device may communicate with one or more core networks or the Internet through a radio access network (radio access network, RAN). The terminal device may be a mobile terminal device, for example, a mobile phone (or referred to as a "cellular" phone, mobile phone (mobile phone)), a computer, or a data card. Alternatively, the terminal device may be a portable, pocket-sized, handheld, computer built-in, or vehicle-mounted mobile apparatus that exchanges voice and/or data with the radio access network. Alternatively, the terminal device may be a device such as a personal communications service (personal communications service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station), a mobile station (mobile station, MS), a remote station (remote station), an access point (access point, AP), a remote terminal device (remote terminal), an access terminal device (access terminal), a user terminal device (user terminal), a user agent (user agent), a subscriber station (subscriber station, SS), customer premises equipment (customer premises equipment, CPE), a terminal (terminal), a user equipment (user equipment, UE), a mobile terminal (mobile terminal, MT), or the like. The terminal device may alternatively be a wearable device or a terminal device in a next-generation communication system, for example, a terminal device in a 6th generation (6th Generation, 6G) communication system or a terminal device in a future evolved public land mobile network (public land mobile network, PLMN).
(2) Network device: The network device may be a device in a wireless network. For example, the network device is a radio access network (radio access network, RAN) node (or device) that connects a terminal device to the wireless network, and may also be referred to as a base station. Some examples of a RAN device are: a next-generation NodeB (generation NodeB, gNodeB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home eNodeB (for example, a home evolved NodeB, or a home NodeB, or an HNB), a baseband unit (baseband unit, BBU), a wireless fidelity (wireless fidelity, Wi-Fi) access point (access point, AP), or the like in a 5G communication system. In addition, in a network structure, the network device may include a central unit (central unit, CU) node, a distributed unit (distributed unit, DU) node, or a RAN device including the CU node and the DU node.

In some implementations, the network device may further include a satellite, an airplane, an uncrewed aerial vehicle, or the like.

In addition, in another possible case, the network device may be another apparatus that provides a wireless communication function for the terminal device. A specific technology and a specific device form that are used by the network device are not limited in this application. For ease of description, this is not limited in this application.

Optionally, the network device may further include a core network device. The core network device includes, for example, an access and mobility management function (access and mobility management function, AMF), a user plane function (user plane function, UPF), or a session management function (session management function, SMF).

In this application, an apparatus configured to implement a function of the network device may be a network device, or may be an apparatus, for example, a processor, a chip, or a chip system, that can support a network device in implementing the function. The apparatus may be mounted in the network device, or may be used with the network device. In the technical solutions provided in this application, an example in which the apparatus configured to implement the function of the network device is a network device is used for describing the technical solutions provided in this application.

In this application, an apparatus configured to implement a function of the terminal device may be a terminal device, or may be an apparatus, for example, a processor, a chip, or a chip system, that can support a terminal device in implementing the function. The apparatus may be mounted in the terminal device, or may be used with the terminal device. In the technical solutions provided in this application, an example in which the apparatus configured to implement the function of the terminal device is a terminal device is used for describing the technical solutions provided in this application.

(3) The terms "system" and "network" may be used interchangeably in this application. "At least one" means one or more, and "plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

This application may be applied to a long term evolution (long term evolution, LTE) system, a new radio (new radio, NR) system, a new radio vehicle-to-everything (NR vehicle-to-everything, NR V2X) system, a system of hybrid networking of a plurality of accessing technologies (for example, LTE and 5G), a device-to-device (device-to-device, D2D) communication system, a machine-to-machine (machine-to-machine, M2M) communication system, Internet of Things (Internet of Things, IoT), an uncrewed aerial vehicle communication system, a communication system that supports a plurality of wireless technologies, for example, an LTE technology and an NR technology, or a non-terrestrial communication system, for example, a satellite communication system or a high-altitude communication platform. In addition, optionally, this application may be applied to a narrowband Internet of Things (narrowband Internet of Things, NB-IoT) system, an enhanced data rate for global system for mobile communications (global system for mobile communications, GSM) evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronous code division multiple access, TD-SCDMA) system, a system to which a future-oriented communication technology is applied, or another communication system.

For example, the communication system includes a network device and a terminal device. The network device serves as a configuration information sending entity, and the terminal device serves as a configuration information receiving entity. Specifically, in the communication system, an entity sends configuration information to another entity, and sends data to the another entity, or receives data sent by the another entity. The another entity receives the configuration information, and sends the data to the configuration information sending entity based on the configuration information, or receives the data sent by the configuration information sending entity. This application may be applied to a terminal device in a connected state or an active (active) state, or may be applied to a terminal device in a non-connected (inactive) state or an idle (idle) state.

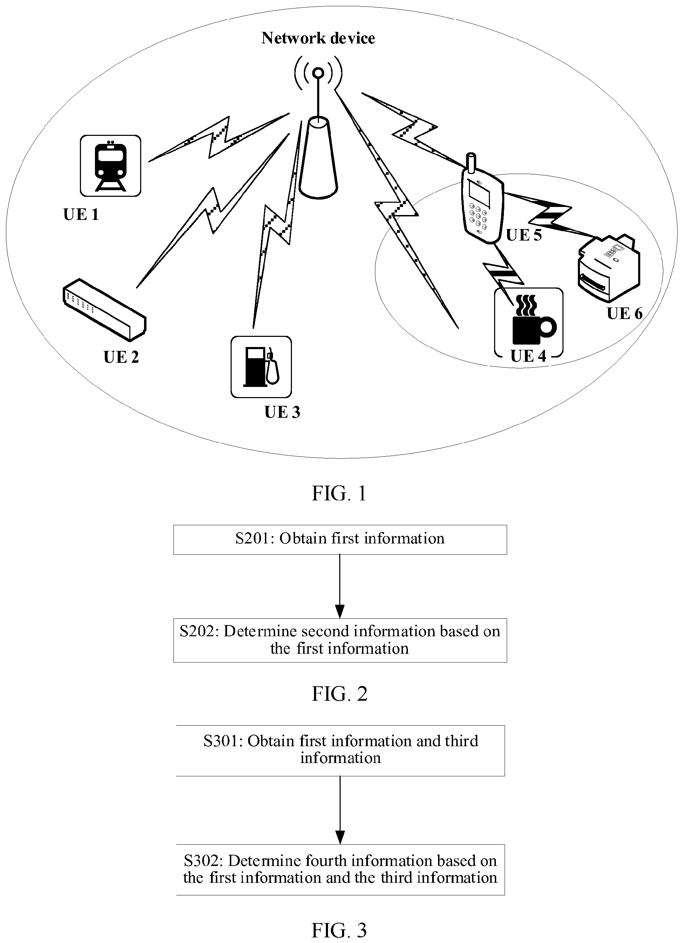

FIG. 1 is a diagram of an application scenario according to an embodiment of this application.

As shown in FIG. 1, a signal sender may be a network device, and a signal receiver may be one or more UEs in a UE 1 to a UE 6. In this case, the network device and the UE 1 to the UE 6 form a communication system. For example, in the communication system, the UE 1 to the UE 6 may send uplink data to the network device, and the network device receives the uplink data sent by the UE 1 to the UE 6. In addition, the network device may send configuration information to the UE 1 to the UE 6.

It may be understood that the signal sender may be one or more UEs in the UE 1 to the UE 6, and the signal receiver may be a network device. Alternatively, the signal sender may be one or more UEs in the UE 1 to the UE 6, and the signal receiver may be another UE in the UE 1 to the UE 6. Alternatively, both the signal sender and the signal receiver may be network devices.

Wireless communication shown in FIG. 1 is used as an example. In a communication network, communication roles generally include different terminal devices, a terminal device and a network device, or the like. A communication process between different terminal devices usually depends on signal processing performed by one or more network devices on a wireless signal and/or a wired signal.

Currently, a user of a communication device generally does not have a network operation and maintenance capability. A to consumer (to consumer, to C for short) communication scenario is used as an example. Because a user of a communication device is generally an individual user, in a communication process, the individual user mainly focuses on user experience obtained based on the communication device, and does not care about operation of a communication network. In this case, operation and maintenance of the communication network is generally implemented by a network operator.

However, in a future communication system, due to factors such as communication security considerations or geographical location limitations (for example, in a to business (to business, to B for short) communication scenario), a part or all of operation and maintenance of a communication network may need to be performed by a user of a communication device, and the user of the communication device usually does not have a professional operation and maintenance capability. Therefore, how to simplify an operation and maintenance process of a communication network is an urgent technical problem to be resolved.

To resolve the foregoing problem, this application provides an information processing method and a related device, to simplify an operation and maintenance process of a communication network, and reduce operation and maintenance costs. The following provides further descriptions with reference to the accompanying drawings.

FIG. 2 is a diagram of an implementation of an information processing method according to this application. The method includes the following steps.

It should be noted that, in FIG. 2, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 2 includes steps S201 and S202. The following separately describes the steps.

S201: The first device obtains first information, where the first information indicates performance of one or more services carried on a network resource.

It should be understood that the first information indicates the performance of the one or more services carried on the network resource. The first information may be referred to as performance information, a key performance indicator (key performance indicator, KPI), or another description. This is not limited herein.

Optionally, a process in which the first device obtains the first information includes: The first device determines the first information based on N pieces of information, where the N pieces of information respectively indicate resource information of N subnetworks. Specifically, the network resource carrying the one or more services may include resources of the N subnetworks. The first device may determine the first information based on the N pieces of information that respectively indicate the resource information of the N subnetworks, so that the solution can be applied to an application scenario including the N subnetworks.

Optionally, the first device may obtain the N pieces of information in a plurality of manners. For example, the first device may separately receive information sent by network devices in the N subnetworks to obtain the N pieces of information, or the first device may separately receive information sent by management devices (or referred to as devices in which management systems are located) in the N subnetworks to obtain the N pieces of information. This is not limited herein.

Optionally, one of the N pieces of information indicates at least one piece of the following information corresponding to a resource of one of the N subnetworks: a KPI, a network resource status, or a service feature of a carried service. Specifically, as a basis for determining the first information in step S201, any one of the N pieces of information may indicate the foregoing at least one piece of information, to determine the first information that indicates the performance of the one or more services carried on the network resource.

Optionally, the N subnetworks include at least one of the following: one or more radio access network (radio access network, RAN) subnetworks, one or more core network (core network, CN) subnetworks, one or more transmission network (transmission network, TRAN for short) subnetworks, or one or more terminal (terminal) subnetworks. Specifically, the network resource may include network resources of a plurality of layers. Therefore, the N subnetworks may include one or more of the RAN subnetwork, the CN subnetwork, the TRAN subnetwork, and the terminal subnetwork, to improve flexibility of network resource deployment.

S202: The first device determines second information based on the first information, where the second information indicates quality of the one or more services.

It should be understood that the second information indicates the quality of the one or more services, and the second information may carry quality information, a key quality indicator (key quality indicator, KQI), or another description. This is not limited herein.

In an implementation example, when operation and maintenance of a communication network is performed by a network operator, because the operator mainly targets a to C market currently, the operator focuses on a network resource during the operation and maintenance of the communication network. For example, the network resource may include a network resource object and a status of the network resource, performance data of the network resource, KPI data at a network level (including a cell level, a slice level, and the like), and the like. However, when a part or all of the operation and maintenance of the communication network may need to be performed by a user of a communication device, an example in which the user of the communication device is an enterprise user is used. Focus objects are a service and a service achievement status rather than the network resources. In addition, the enterprise user usually does not have professional network operation and maintenance knowledge and needs a large quantity of manpower and material resources to learn how to manage/maintain the communication network.

It can be learned from the technical solution shown in FIG. 2 that, after the first device obtains, in step S201, the first information that indicates the performance of the one or more services carried on the network resource, the first device determines, in step S202 based on the first information, the second information including the quality of the one or more services carried on the network resource. In other words, the first device can determine, based on the performance information of the one or more services carried on the network resource, the quality of the service carried on the network resource. Therefore, when the second information provided by the first device can indicate the quality of the service carried on the network resource, the user of the communication device can perceive an execution status of the service based on the second information, to simplify an operation and maintenance process of a communication network, and reduce operation and maintenance costs.

FIG. 3 is a diagram of an implementation of an information processing method according to this application. The method includes the following steps.

It should be noted that, in FIG. 3, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 3 includes steps S301 and S302. The following separately describes the steps.

S301: The first device obtains first information and third information, where the first information indicates performance of one or more services carried on a network resource, and the third information indicates an intent for a network.

S302: The first device determines fourth information based on the first information and the third information, where the fourth information indicates achievement information of the performance of the one or more services.

Optionally, the achievement information of the performance of the service includes at least one of the following: whether the performance of the service is achieved, an achievement proportion of the performance of the service, and a non-achievement proportion of the performance of the service.

It may be understood that the intent in this application indicates an expectation for a network system, including a requirement, a target, a constraint, and the like.

Optionally, the network system is a 3rd generation partnership project (3rd generation partnership project, 3GPP) system.

According to the technical solution in FIG. 3, after the first device obtains, in step S301, the first information that indicates the performance of the one or more services carried on the network resource and the third information that indicates the intent for the network, the first device determines, in step S302 based on the first information and the third information, the fourth information that indicates the achievement information of the performance of the one or more services. In other words, the first device can determine, based on performance information of the one or more services carried on the network resource and the intent for the network, the achievement information of the performance of the service carried on the network resource. Therefore, when the fourth information determined by the first device can indicate the achievement information of the performance of the service, a user of a communication device can perceive an execution status of the service based on the intent, to simplify an operation and maintenance process of a communication network, and reduce operation and maintenance costs.

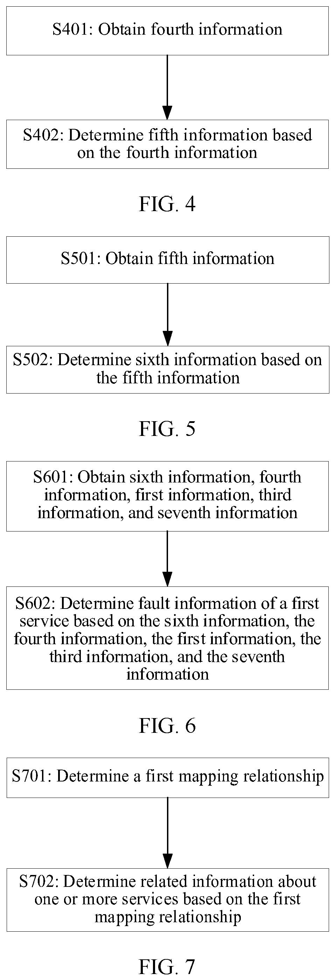

FIG. 4 is a diagram of an implementation of an information processing method according to this application. The method includes the following steps.

It should be noted that, in FIG. 4, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 4 includes steps S401 and S402. The following separately describes the steps.

S401: The first device obtains fourth information, where the fourth information indicates achievement information of performance of one or more services carried on a network resource.

It should be noted that, in an implementation process shown in FIG. 4, a manner in which the first device obtains the fourth information in step S401 may be obtained in the process of step S301 and step S302 shown in FIG. 3, or the first device may obtain the fourth information in another manner. For example, the first device obtains the fourth information based on manually input data; the first device determines, based on the performance of the one or more services carried on the network resource (for example, the first information) and with reference to self-learned information, the achievement information that is of the performance of the one or more services carried on the network resource and that is indicated by the fourth information; the first device determines, based on the performance of the one or more services carried on the network resource (for example, the first information) and with reference to a manually-set empirical value, the achievement information that is of the performance of the one or more services carried on the network resource and that is indicated by the fourth information; or the first device obtains the fourth information in another manner. This is not limited herein.

S402: The first device determines fifth information based on the fourth information, where the fifth information indicates overall achievement information of the one or more services.

Optionally, the overall achievement information of the one or more services includes at least one of the following: whether overall performance of the one or more services is achieved, an achievement proportion of the overall performance of the one or more services, and a non-achievement proportion of the overall performance of the one or more services.

According to the technical solution shown in FIG. 4, after the first device obtains, in step S401, the fourth information that indicates the achievement information of the performance of the one or more services, the first device determines, in step S402 based on the fourth information, the fifth information that indicates the overall achievement information of the one or more services. In other words, the first device can further determine the overall achievement information of the one or more services based on the achievement information of the performance of the service. Therefore, when the fifth information determined by the first device can indicate the overall achievement information of the one or more services, a user of a communication device can perceive an overall execution status of the service based on an intent, to simplify an operation and maintenance process of a communication network, and reduce operation and maintenance costs.

FIG. 5 is a diagram of an implementation of an information processing method according to this application. The method includes the following steps.

It should be noted that, in FIG. 5, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 5 includes steps S501 and S502. The following separately describes the steps.

S501: The first device obtains fifth information, where the fifth information indicates overall achievement information of one or more services carried on a network resource.

It should be noted that, in an implementation process shown in FIG. 5, a manner in which the first device obtains the fifth information in step S501 may be obtained in the process of step S401 and step S402 shown in FIG. 4, or the first device may obtain the fifth information in another manner. For example, the first device obtains the fifth information based on manually input data; the first device determines, based on the performance of the one or more services carried on the network resource (for example, the first information) and with reference to self-learned information, the overall achievement information that is of the one or more services carried on the network resource and that is indicated by the fifth information; the first device determines, based on the performance of the one or more services carried on the network resource (for example, the first information) and with reference to a manually-set empirical value, the overall achievement information that is of the one or more services carried on the network resource and that is indicated by the fifth information; or the first device obtains the fifth information in another manner. This is not limited herein.

S502: The first device determines sixth information based on the fifth information, where the sixth information indicates overall achievement information of an intent for a network.

Optionally, the overall achievement information of the intent for the network includes at least one of the following: whether the intent for the network is achieved as a whole, an overall achievement proportion of the intent for the network, and an overall non-achievement proportion of the intent for the network.

According to the technical solution shown in FIG. 5, after the first device obtains, in step S501, the fifth information that indicates the overall achievement information of the one or more services, the first device determines, in step S502 based on the fifth information, the sixth information that indicates the overall achievement information of the intent for the network. In other words, the first device can further determine the overall achievement information of the intent for the network based on the overall achievement information of the service. Therefore, when the sixth information determined by the first device can indicate the overall achievement information of the intent for the network, a user of a communication device can manage/maintain a communication network based on the intent, to simplify an operation and maintenance process of the communication network, and reduce operation and maintenance costs.

FIG. 6 is a diagram of an implementation of an information processing method according to this application. The method includes the following steps.

It should be noted that, in FIG. 6, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 6 includes steps S601 and S602. The following separately describes the steps.

S601: The first device obtains sixth information, fourth information, first information, third information, and seventh information, where the sixth information indicates overall achievement information of an intent for a network, the fourth information indicates achievement information of performance of one or more services, the first information indicates the performance of the one or more services carried on a network resource, the third information indicates the intent for the network, and the seventh information indicates a resource status of the network.

It should be noted that, in step S601, the first device may obtain the foregoing information (including the sixth information, the fourth information, the first information, the third information, and the seventh information) based on the foregoing embodiment. Similar to the foregoing descriptions of step S401 and step S501, the first device may alternatively obtain the foregoing information in another manner. For example, the first device obtains the foregoing information based on manually input data; the first device determines the foregoing information based on the performance of the one or more services carried on the network resource (for example, the first information) and with reference to self-learned information; the first device determines the foregoing information based on the performance of the one or more services carried on the network resource (for example, the first information) and with reference to a manually-set empirical value; or the first device determines the foregoing information in another manner. This is not limited herein.

S602: The first device determines fault information of a first service based on the sixth information, the fourth information, the first information, the third information, and the seventh information, where the first service is an unachieved service in the one or more services.

In an implementation example, when determining, based on the sixth information, that the intent for the network is not achieved, the first device determines, based on the fourth information, an unachieved service of the performance of one or more services. Then, the first device further determines, based on the first information, performance of the unachieved service. Next, the first device determines, based on a combination of the third information and the seventh information, a network resource corresponding to the unachieved service, to locate a fault of the unachieved service.

According to the foregoing technical solution shown in FIG. 6, after the first device obtains, in S601, the sixth information, the fourth information, the first information, the third information, and the seventh information, the first device can further determine, in S602 based on the obtained information and a correspondence between intent-related information and service-related information, the fault information of the first service that is not achieved, to locate and analyze the fault of the unachieved service. In this way, a user of a communication device can manage/maintain a communication network based on the intent-related information and the service-related information, to simplify an operation and maintenance process of the communication network, and reduce operation and maintenance costs.

In a possible implementation of FIG. 2 to FIG. 6, the network in the foregoing technical solution includes a first network or N subnetworks in the first network, where N is a positive integer.

Optionally, the N subnetworks include at least one of the following: one or more radio access network (radio access network, RAN) subnetworks, one or more core network (core network, CN) subnetworks, one or more transmission network (transmission network, TRAN for short) subnetworks, or one or more terminal (terminal) subnetworks.

Specifically, the network resource may include network resources of a plurality of layers. Therefore, the N subnetworks may include one or more of the RAN subnetwork, the CN subnetwork, the TRAN subnetwork, and the terminal subnetwork, to improve flexibility of network resource deployment.

FIG. 7 is a diagram of an implementation of an information processing method according to this application. The method includes the following steps.

It should be noted that, in FIG. 7, the method is described by using an example in which a first device is used as an execution entity of the information processing method. The first device may be a server, a virtual machine, a container, or the like. However, the execution entity of the interaction is not limited in this application. For example, the first device in FIG. 2 may alternatively be a chip, a chip system, or a processor that supports the first device in implementing the method, or may be a logical module or software that can implement all or some of the first device. The method shown in FIG. 7 includes steps S701 and S702. The following separately describes the steps.

S701: The first device determines a first mapping relationship, where the first mapping relationship indicates a mapping relationship between a fixed identifier and a temporary identifier that are of one or more services.

S702: The first device determines related information about the one or more services based on the first mapping relationship.

Optionally, the related information about the service may include first information that indicates performance of the one or more services carried on a network resource, second information that indicates quality of the one or more services, fourth information that indicates achievement information of the performance of the one or more services, and other service-related information that may exist. This is not limited herein.

In a possible implementation of step S701, the first device receives indication information that indicates the first mapping relationship.

It may be understood that the first device may obtain, in a plurality of manners, the indication information that indicates the first mapping relationship. For example, the first device may locally maintain the indication information that indicates the first mapping relationship, or the first device may obtain, in a manner of receiving user input information through an input/output interface, the indication information that indicates the first mapping relationship. This is not limited herein.

In a possible implementation of step S701, the method further includes: The first device sends eighth information, where the eighth information indicates the temporary identifier of the one or more services. The first device receives ninth information, where the ninth information indicates the fixed identifier of the one or more services. The first device determines the first mapping relationship based on the eighth information and the ninth information. Specifically, when the first mapping relationship is maintained by a second device (for example, a core network device or a management/control device of the core network device), after sending, to the second device, the eighth information that indicates the temporary identifier of the one or more services, the first device may receive, from the second device, the ninth information that indicates the fixed identifier of the one or more services, so that the first device can clearly determine the mapping relationship between the temporary identifier and the fixed identifier, and further determine, based on the mapping relationship, service information of the one or more services carried on the network resource.

In an implementation example, in a communication network, management is performed by hierarchically, and security levels of different layers are different. For example, wireless access is at a lower layer, and cannot include information that can identify a user identity. Therefore, random processing is performed on a user service identity, in other words, a temporary identifier is dynamically generated. However, when network KPI data is generated, an object of a service instance in each subnetwork needs to be identified, to aggregate KPI data of the service object in each subnetwork into KPI data at a network level. Therefore, the service objects on the subnetworks need to be associated.

Generally, a temporary identifier is generated on an upper-layer core network. Therefore, the core network stores a correspondence between the temporary identifier and a fixed identifier of a service object. For example, each UE has a fixed IMSI identifier, and a temporary identifier S-TMSI is generated on the core network when the UE performs a service. A cross-domain integrated network management system needs to synchronize a correspondence between the IMSI and the S-TMSI from the core network through a service object identifier synchronization interface for subsequent service object association. Based on the foregoing implementation process, the KPI data of the service object at a network level is calculated through association of service object identifiers. In addition, the interface for synchronizing the temporary identifier and the fixed identifier of the service object is exposed to an upper layer for use, to facilitate subsequent extension of end-to-end application of a service object instance. For example, in this application, KPI data at a network level is generated through the interface.

According to the technical solution shown in FIG. 7, when a data flow of the one or more services is actually transmitted in a network, the data flow is generally indicated by the temporary identifier. Therefore, when the first mapping relationship obtained by the first device in step S701 indicates the mapping relationship between the fixed identifier and the temporary identifier that are of the one or more services, the first device may determine, in step S702, the temporary identifier of the one or more services based on the first mapping relationship, so that the first device can further obtain, based on the temporary identifier of the one or more services, service-related information that is of the one or more services and that is actually transmitted in the network. In this way, an execution status of the service is perceived, to simplify an operation and maintenance process of a communication network, and reduce operation and maintenance costs.

It may be understood that, in any possible implementation of FIG. 2 to FIG. 7, the first device may obtain the foregoing information (including one or more of the first information to the seventh information, or other indication information) in a plurality of manners. For example, the first device may receive the foregoing information sent by another device; the first device may obtain the foregoing information in a pre-configuration (or default configuration) manner; or the first device may obtain the foregoing information in a manner of receiving the user input information through the input/output interface. This is not limited herein.

The following describes the information in the foregoing method by using examples with reference to some accompanying drawings.

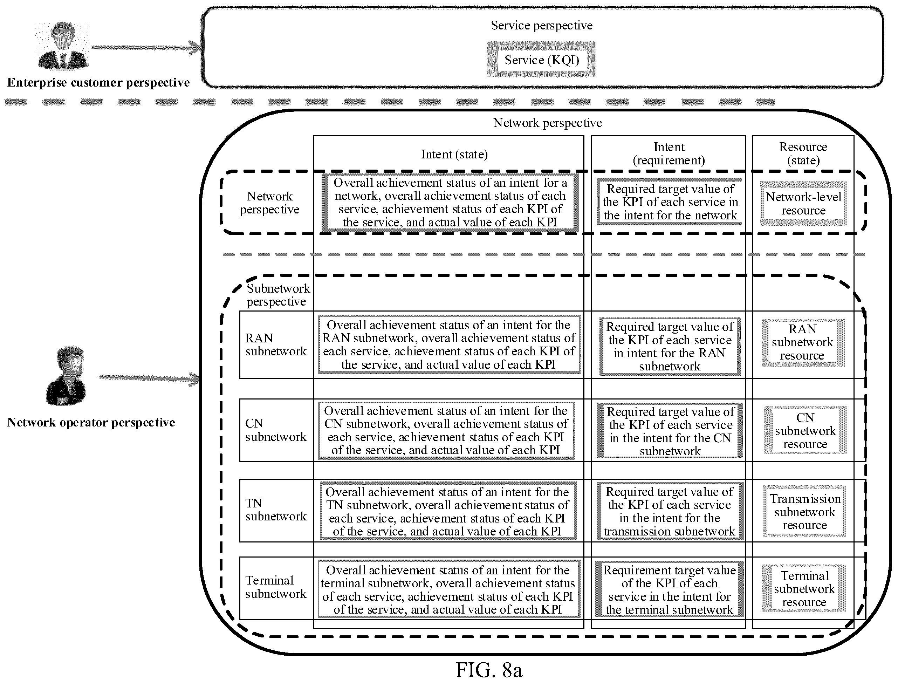

An implementation process shown in FIG. 8a is used as an example to describe the foregoing process. In the implementation example shown in FIG. 8a, an example in which N subnetworks in a first network include a RAN subnetwork, a CN subnetwork, a TN subnetwork, and a terminal subnetwork is used.

As shown in FIG. 8a, a first device may be used as a network operation and maintenance device. A resource corresponding to the first network is a resource at a network level. In other words, a resource status corresponding to the first network may be reflected by using the resource at a network level. Resources corresponding to the N subnetworks in the first network may include a RAN subnetwork resource, a CN subnetwork resource, a transmission subnetwork resource, a terminal subnetwork resource, and the like in the figure. In other words, resources corresponding to the subnetworks in the first network may be reflected by using the subnetwork resources in the figure.

In the example shown in FIG. 8a, information that can be observed or perceived from an enterprise customer perspective includes quality of service, and the quality of service may be represented as a KQI. For example, the KQI may be determined by using "actual values of KPIs of a service (that is, an implementation example of the first information)" in a network perspective of the first information. The KPI include a service access success rate and a service drop rate on a control plane, a service data throughput, a service packet transmission delay, and a packet loss rate on a user data plane. The performance data can reflect a support effect of a communication network for the service. However, final quality of service is generally a result of comprehensive impact of the KPIs, and is measured by using a KQI. Therefore, the KPI needs to be converted to the KQI.

In an implementation example, definitions of KQIs of different services may be different, and there are generally two types of services:

One of the types is a user-experience-oriented service, whose KQI may be defined based on a mean opinion score (mean opinion score, MOS) score. For example, a KQI of the MOS score defined for a video transmission service and an achievement status after KPI association are shown in the following Table 1.

**Table 1**

| Definition of the KQI of the video service | Service target | Actual service KQI | Achievement status |
|---|---|---|---|
| The KQI is defined based on a video experience MOS score. | 5: Excellent | 5: Excellent | Achieved |
| | | A value obtained through calculation based on a proper conversion algorithm, a network KPI of the service, and a service feature is "f (KPI, service feature)". | |
| 1: Bad | | | |
| 2: Below average | | Optionally, some KPIs that have large impact, for example, a throughput or a packet loss rate, and this specifically depends on an algorithm, may alternatively be selected for calculation to obtain the KQI | |
| 3: Fair | | | |
| 4: Good | | | |
| 5: Excellent | | | |

In other words, video requirements on network transmission are mainly reflected in resolution, a frame rate, and a bit quantity of true color. These service features determine that a video bitstream data size is a needed effective throughput of transmission. An actual effective throughput of network transmission may be obtained by subtracting the packet loss rate from the throughput in the network KPI. The MOS score is obtained through calculation based on a target throughput and an actual throughput. For example, if the actual throughput to the target throughput is greater than or equal to 1, the MOS score is 5; if the actual throughput to the target throughput is greater than or equal to 90%, the MOS score is 4; if the actual throughput to the target throughput is greater than or equal to 80%, the MOS score is 3; if the actual throughput to the target throughput is greater than or equal to 70%, the MOS score is 2; or if the actual throughput to the target throughput is less than 70%, the MOS score is 1.

The other type is a non-experience-oriented service (for example, a service that can be quantified and that is interconnected with another system). For details about a definition of a KQI of the non-experience-oriented service, refer to definitions of some quantitative indicators of the interconnected party. For example, a KQI of a file transmission service is defined as duration for completing transmission of a file. The KQI is not only affected by a network transmission throughput and a file size, but also affected by another network KPI, for example, a packet loss rate or an access success rate, as shown in Table 2 below.

**Table 2**

| Definition of the KQI of the file transmission service | Service target | Actual service KQI | Achievement status |
|---|---|---|---|
| Duration for completing transmission of a file over a network | 1 ms | 0.7 ms | Achieved |
| | | A value obtained through calculation based on a proper algorithm, a KPI of the service on a network, and a service feature is f (KPI, service feature) | |
| | | Some KPIs that have a large impact, for example, a throughput or a packet loss rate, and this specifically depends on an algorithm, may alternatively be selected for calculation to obtain the KQI | |

In other words, duration for completing transmission of a file over the network = file size (service feature) / actual effective throughput of network transmission. The actual effective throughput of the network transmission may be obtained by subtracting the packet loss rate from the throughput in the network KPI.

It can be learned from the implementation examples shown in Table 1 and Table 2 that a service-based perception model is introduced for a to B enterprise customer to reflect the quality of service. In this way, instead of non-enterprise customer language such as the network KPI, the achievement status of a network service requirement is directly presented to a to B enterprise customer side, to facilitate interconnection with an enterprise IT system.

Optionally, as shown in FIG. 8a, a network operation and maintenance process may be referred to as information viewed from a network operator perspective, and service-related information (including a KQI and the like) may be referred to as information viewed from the enterprise customer perspective.

In the example shown in FIG. 8a, in the network perspective, the information that may be observed/perceivable from the network operator perspective includes:
an overall achievement status of an intent for the network (that is, an implementation example of the foregoing sixth information), an overall achievement status of each service (that is, an implementation example of the foregoing fifth information), an achievement status of each KPI of the service (that is, an implementation example of the foregoing fourth information), an actual value of each KPI (that is, an implementation example of the foregoing first information), a required target value of the KPI of each service in the intent for the network (that is, an implementation example of the foregoing third information), and the resource at a network level (that is, an implementation example of the foregoing seventh information).

Optionally, as shown in FIG. 8a, in a subnetwork perspective, subnetwork information obtained through semantic conversion performed on the information that can be observed/perceivable may be separately obtained from the network operator perspective, including at least one of the following:
an overall achievement status of an intent for RAN subnetwork (that is, an implementation example of the foregoing sixth information), an overall achievement status of each service (that is, an implementation example of the foregoing fifth information), an achievement status of each KPI of the service (that is, an implementation example of the foregoing fourth information), an actual value of each KPI (that is, an implementation example of the foregoing first information), a required target value of the KPI of each service in the intent for the RAN subnetwork (that is, an implementation example of the foregoing third information), and the RAN subnetwork resource (that is, an implementation example of the foregoing seventh information) in the RAN subnetwork;
an overall achievement status of an intent for the CN subnetwork (that is, an implementation example of the foregoing sixth information), an overall achievement status of each service (that is, an implementation example of the foregoing fifth information), an achievement status of each KPI of the service (that is, an implementation example of the foregoing fourth information), an actual value of each KPI (that is, an implementation example of the foregoing first information), a required target value of the KPI of each service in the intent for the CN subnetwork (that is, an implementation example of the foregoing third information), and the CN subnetwork resource (that is, an implementation example of the foregoing seventh information) in the CN subnetwork;
an overall achievement status of an intent for the TN subnetwork (that is, an implementation example of the foregoing sixth information), an overall achievement status of each service (that is, an implementation example of the foregoing fifth information), an achievement status of each KPI of the service (that is, an implementation example of the foregoing fourth information), an actual value of each KPI (that is, an implementation example of the foregoing first information), a required target value of the KPI of each service in the intent for the transmission subnetwork (that is, an implementation example of the foregoing third information), and the transmission subnetwork resource (that is, an implementation example of the foregoing seventh information) in the transmission subnetwork; and
an overall achievement status of an intent for the terminal subnetwork (that is, an implementation example of the foregoing sixth information), an overall achievement status of each service (that is, an implementation example of the foregoing fifth information), an achievement status of each KPI of the service (that is, an implementation example of the foregoing fourth information), an actual value of each KPI (that is, an implementation example of the foregoing first information), a required target value of the KPI of each service in the intent for the terminal subnetwork (that is, an implementation example of the foregoing third information), and the terminal subnetwork resource (that is, an implementation example of the foregoing seventh information) in the terminal subnetwork.

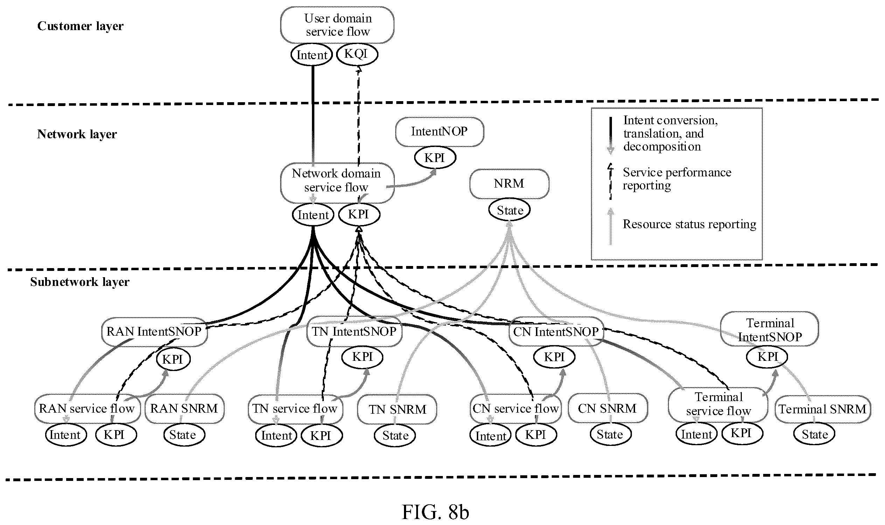

An implementation process shown in FIG. 8b is used as an example to describe the foregoing implementation process.

In the example shown in FIG. 8b, first information that indicates performance of the one or more services carried on a network resource may be determined by aggregating a KPI in a network domain service flow (network domain service flow) at a network layer, and a KPI in a RAN service flow (service flow), a KPI of a TN service flow, a KPI in a CN service flow, and a KPI in a terminal service flow (as shown by a curve of "service performance reporting" in the figure) at a subnetwork layer (as shown by curves of "service performance reporting" in the figure). In addition, quality of service (denoted as a KQI) included in the second information is determined based on the KPIs of the service flows.

In the example shown in FIG. 8b, the first information that indicates the performance of the one or more services carried on the network resource may be determined by aggregating a KPI in an intent network operator (intent network operator, IntentNOP for short) at the network layer, and a KPI in RAN IntentNOP, a KPI in TN IntentNOP, a KPI in CN IntentNOP, and a KPI in Terminal IntentNOP (as shown by the curves of "service performance reporting" in the figure) at the subnetwork layer. In addition, achievement information of an intent is determined based on these KPIs.

Optionally, in the example shown in FIG. 8b, the third information may be denoted as an intent (or referred to as a target, that is, an implementation example of the foregoing third information), and may be decomposed into an intent for a network and an intent for one or more subnetworks (as shown by curves of "intent conversion, translation, and decomposition" in the figure).

Optionally, the example shown in FIG. 8b may further include state information (denoted as a state). The state information (that is, an implementation example of the foregoing seventh information) includes a network resource model (network resource model, NRM) at the network layer, a RAN subnetwork resource model (subnetwork resource model, SNRM), TN SNRM, a CN SNRM, and a terminal SNRM at the subnetwork layer. The status at the network layer and the statuses at the subnetwork layer may be aggregated at the NRM at the network layer by using curves corresponding to "resource status reporting" (as shown the curves of "resource status reporting" in the figure).

In the example shown in FIG. 8b, at least one of the following may be achieved:
focusing on, at a customer layer, a user domain service object, where the object includes a target set during service deployment and an actual KQI after service running, and an achievement status of each service can be clearly presented based on calculation of the two factors;
focusing on, at the network layer, the intent for the network and the network resource, where the intent for the network includes intents for services, a service target is converted and translated from a user domain service target, a service KPI is obtained through association and calculation of KPIs of the subnetworks, a KPI of the intent is obtained by aggregating the KPIs of the services in the intent, and a network resource status is reported by resource statuses of the subnetworks; and
focusing on, at the subnetwork layer, the intents for the subnetworks and subnetwork resources, where a service target is obtained through decomposition of a network service target, a service KPI is obtained by collecting statistics on the intents for the subnetworks, an intent KPI is obtained by aggregating KPIs of all services in the intent, and a network resource status is obtained by collecting statistics on statuses of the subnetworks.

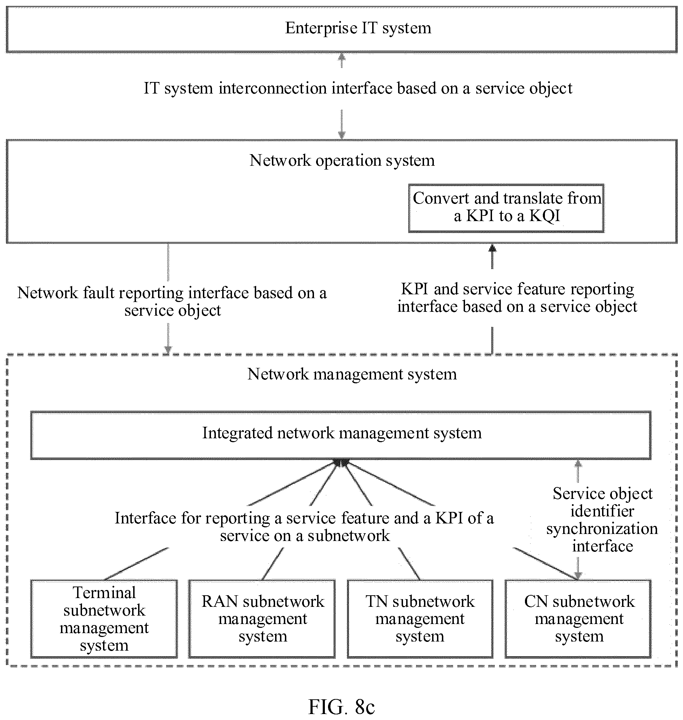

In an implementation example, the foregoing method may be applied to an architecture shown in FIG. 8c.

In the architecture shown in FIG. 8c, a first device may include a network operation system in FIG. 8c.

Optionally, the first device may further include an enterprise IT system in FIG. 8c.

Optionally, the first device may further include a network management system in FIG. 8c. The network management system is further divided into a cross-domain integrated network management system and a network management system of each subnetwork.

In FIG. 8c, the enterprise IT system may be a system for an enterprise production activity and an operation service procedure. The network operation system may be a communication network used for operating an enterprise, and has main functions: a network service and network requirement/service management, including converting and translating a KPI of a service on a network side to a KQI of the service. The integrated network management system may be responsible for cross-subnetwork management, and has main functions: network intent and resource management, including association of service objects in subnetworks. The subnetwork management system may be responsible for subnetwork management, and has main functions: subnetwork intent and resource management, including collecting statistics on a service feature and KPI data of a service object in a subnetwork of the subnetwork management system.

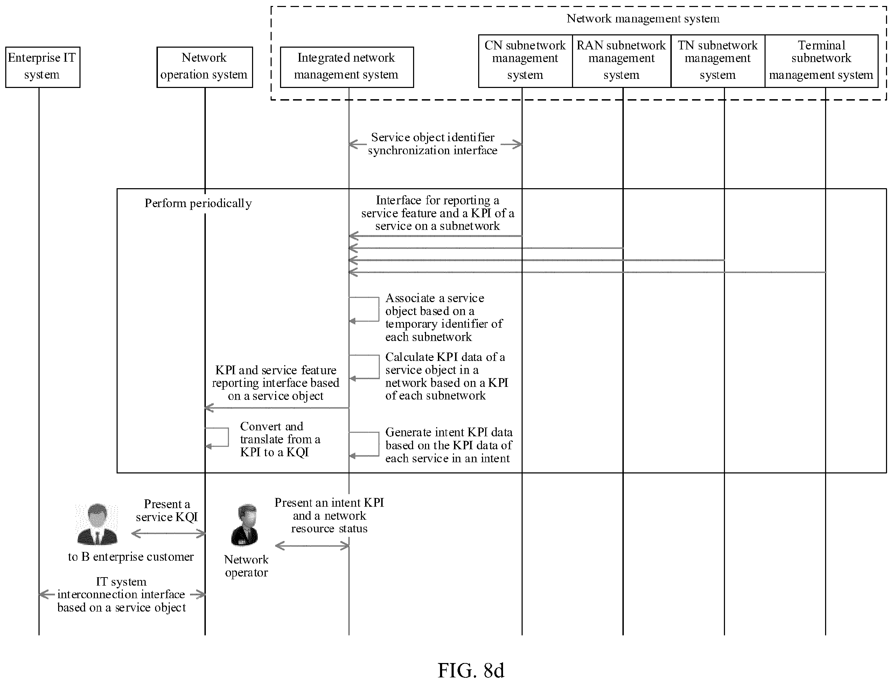

For example, each piece of information transmitted in the foregoing implementation process may be transmitted through an interface in the architecture shown in FIG. 8c, and an interaction process related to each interface is shown in FIG. 8d. The following describes, with reference to an implementation process shown in Table 8a, the information transmitted through each interface in FIG. 8d.

**Table 3**

| Interface | Direction | Description | Interface parameter content | Corresponding information |
|---|---|---|---|---|
| IT system interconnection interface based on a service object | Enterprise IT system <-> network operation system | Basic operation based on the service object | Service object | |
| KPI and service feature reporting interface based on a service object | Network management system -> network operation system | The network management system reports each network KPI at a service level and a service feature collected during service running to the upper-layer network operation system, for conversion to a service KQI for presentation to an enterprise customer. | 1. Control plane: access success rate and service drop rate at a service level; | First information |
| | | | 2. User plane: throughput, packet transmission delay, and packet loss rate at a service level; and | |
| | | | 3. Service feature | |
| Network fault reporting interface based on a service object | Network operation system -> network management system | When a fault occurs in a service, the enterprise customer reports the fault to a network system after eliminating (or not eliminating) other faults | 1. Affected service | Identifier of a first service, or fault information of the first service |
| | | | 2. Unachieved KPI indicator | |
| Interface for reporting a service feature and a KPI of the service on a subnetwork | Subnetwork -> Integrated network management system | Each subnetwork system reports a service KPI as well as a service feature and a network resource status collected during service running to the integrated network management system for cross-domain association and generation of a service KPI at a network level | KPI data | N pieces of information |
| | | | Network resource status | |
| | | | Service feature | |
| Service object identifier synchronization interface | Integrated network management system <-> subnetwork | The cross-domain management system needs to associate a fixed identifier of the service object with temporary identifiers of the service object in subnetworks to calculate a KPI of the service object at a network level, and therefore, the temporary identifiers in the subnetworks need to be synchronized. | A pair of the temporary identifier ID and the fixed identifier ID of the service object | Eighth information and ninth information |

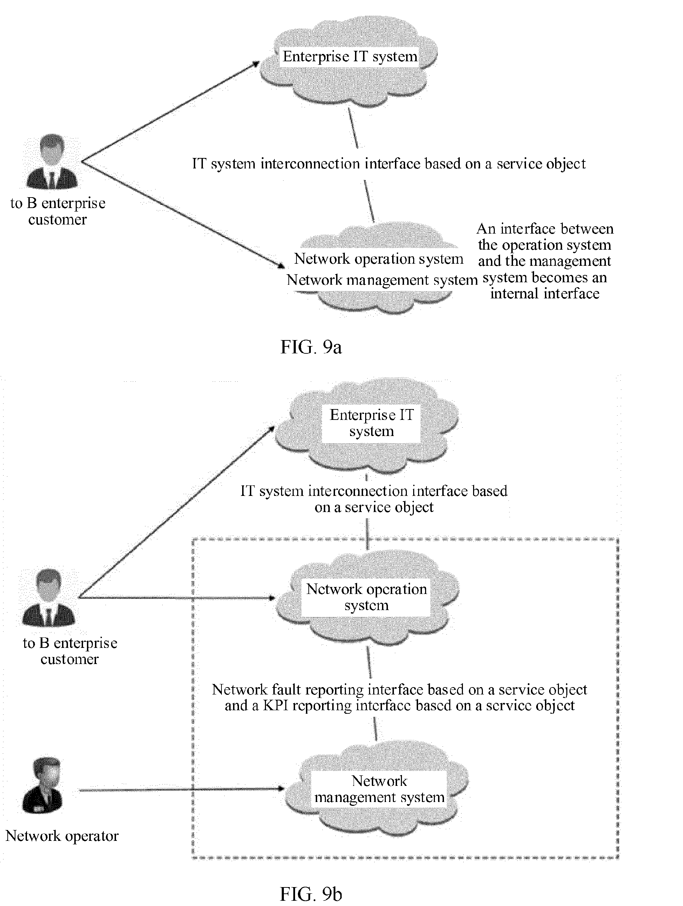

In an implementation example, the foregoing implementation process may be applied to a scenario of an enterprise customer self-built network. For example, as shown in FIG. 9a, in this scenario, an enterprise customer plays two roles. As a to B enterprise customer, the enterprise customer is a user of a communication network, and as a communication network operator, the enterprise customer is a manager of the communication network. In this scenario, the entire network is built by the enterprise. A network operation system and a network management system are generally co-deployed, and provide operation and maintenance functions for the communication network, and interconnect with an enterprise IT system by using an enterprise service object. In this way, the foregoing implementation process may be oriented to a to B enterprise market, to support a network operation and maintenance mode defined from a customer perspective and interconnection with the enterprise IT system. An achievement status of a network service requirement is provided from the customer perspective. In addition, interconnection with enterprise IT system is supported, and enterprise IT personnel can implement operation and maintenance of the communication network without having and understanding professional background and professional knowledge of the communication network.

In another implementation example, the foregoing implementation process may be applied to a scenario in which an enterprise uses an operator network. For example, as shown in FIG. 9b, in this scenario, a to B enterprise customer is a user of a communication network, and a network operator is a manager of the communication network. In this scenario, a network operation system and a network management system are provided by the network operator. The network operation system is for the enterprise customer to subscribe to a network communication service, subscribe to a query service and quality of service, and interconnect with an enterprise IT system based on an enterprise service object. Therefore, in the foregoing implementation process, the network management system is for the network operator to operate and maintain the communication network, manage the network in an intent manner, and interconnect with the network operation system based on the service object. For the enterprise customer, perceiving an achievement status of a network service requirement, and interconnection with the enterprise IT system are supported. In addition, for the network operator, the communication network can be managed in the intent manner.

To implement functions in the foregoing methods provided in this application, a communication apparatus performing the foregoing method may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

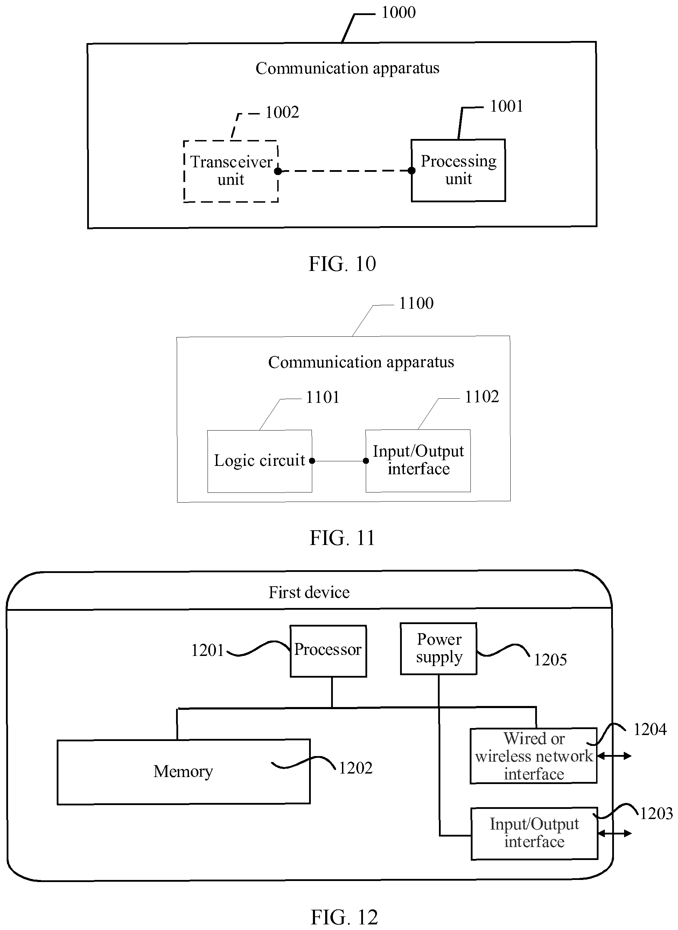

Refer to FIG. 10. An embodiment of this application provides a communication apparatus 1000. The communication apparatus 1000 can implement a function of any communication apparatus (for example, the first device or the second device) in the foregoing method embodiments, and therefore can also achieve beneficial effects of the foregoing method embodiments. In this application, the communication apparatus 1000 may be the first device (or the second device), or may be a software module, an integrated circuit, an element, or the like in the first device (or the second device), for example, a chip. This is not limited. The following uses an example in which the communication apparatus 1000 is the first device (or the second device) for description. The apparatus 1000 includes a processing unit 1001.

Optionally, the apparatus 1000 further includes a transceiver unit 1002.

In a possible implementation, when the apparatus 1000 shown in FIG. 10 is configured to perform the method related to the first device in the foregoing embodiment, the processing unit 1001 is configured to obtain first information, where the first information indicates performance of one or more services carried on a network resource. The processing unit 1001 is further configured to determine second information based on the first information, where the second information indicates quality of the one or more services.

In a possible implementation, when the apparatus 1000 shown in FIG. 10 is configured to perform the method related to the first device in the foregoing embodiment, the processing unit 1001 is configured to obtain first information and third information, where the first information indicates performance of one or more services carried on a network resource, and the third information indicates an intent for a network. The processing unit 1001 is further configured to determine fourth information based on the first information and the third information, where the fourth information indicates achievement information of the performance of the one or more services.

In a possible implementation, when the apparatus 1000 shown in FIG. 10 is configured to perform the method related to the first device in the foregoing embodiment, the processing unit 1001 is configured to obtain fourth information, where the fourth information indicates achievement information of performance of one or more services carried on a network resource. The processing unit 1001 is further configured to determine fifth information based on the fourth information, where the fifth information indicates overall achievement information of the one or more services.

In a possible implementation, when the apparatus 1000 shown in FIG. 10 is configured to perform the method related to the first device in the foregoing embodiment, the processing unit 1001 is configured to obtain fifth information, where the fifth information indicates overall achievement information of one or more services carried on a network resource. The processing unit 1001 is further configured to determine sixth information based on the fifth information, where the sixth information indicates overall achievement information of an intent for a network.

In a possible implementation, when the apparatus 1000 shown in FIG. 10 is configured to perform the method related to the first device in the foregoing embodiment, the processing unit 1001 is configured to obtain sixth information, fourth information, first information, third information, and seventh information, where the sixth information indicates overall achievement information of an intent for a network, the fourth information indicates achievement information of performance of one or more services, the first information indicates the performance of the one or more services carried on a network resource, the third information indicates the intent for the network, and the seventh information indicates a resource status of the network. The processing unit 1001 is further configured to determine fault information of a first service based on the sixth information, the fourth information, the first information, the third information, and the seventh information, where the first service is an unachieved service in the one or more services.

In a possible implementation, when the apparatus 1000 shown in FIG. 10 is configured to perform the method related to the first device in the foregoing embodiment, the processing unit 1001 is configured to determine a first mapping relationship, where the first mapping relationship indicates a mapping relationship between a fixed identifier and a temporary identifier that are of one or more services. The processing unit 1001 is further configured to determine related information about the one or more services based on the first mapping relationship.

In a possible implementation, when the apparatus 1000 shown in FIG. 10 is configured to perform the method related to the second device in the foregoing embodiment, the transceiver unit 1002 is configured to receive fifth information, where the fifth information indicates a fixed identifier of one or more services. The processing unit 1001 is configured to determine sixth information, where the sixth information indicates a temporary identifier of the one or more services. The transceiver unit 1002 is further configured to send the sixth information.

In a possible implementation, when the apparatus 1000 shown in FIG. 10 is configured to perform the method related to the second device in the foregoing embodiment, the processing unit 1001 is configured to determine a first mapping relationship, and the transceiver unit 1002 is configured to send the first mapping relationship, where the first mapping relationship indicates a mapping relationship between a fixed identifier and a temporary identifier that are of one or more services, and the first mapping relationship determines related information about the one or more services.

It should be noted that for content such as an information execution process of the units of the communication apparatus 1000, reference is made to descriptions in the foregoing method embodiments of this application. Details are not described herein again.

FIG. 11 is a diagram of a structure of another communication apparatus 1100 according to this application. The communication apparatus 1100 includes at least an input/output interface 1102. The communication apparatus 1100 may be a chip or an integrated circuit.

Optionally, the communication apparatus further includes a logic circuit 1101.

The transceiver unit 1001 shown in FIG. 10 may be a communication interface. The communication interface may be the input/output interface 1102 in FIG. 11, and the input/output interface 1102 may include an input interface and an output interface. Alternatively, the communication interface may be a transceiver circuit, and the transceiver circuit may include an input interface circuit and an output interface circuit.

In a possible implementation, the processing unit 1002 shown in FIG. 10 may be the logic circuit 1101 in FIG. 11.

Optionally, the logic circuit 1101 may be a processing apparatus, and some or all of functions of the processing apparatus may be implemented by software. Some or all of functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory via a circuit/wire, to read and execute the computer program stored in the memory. The memory and the processor may be integrated together, or may be physically independent of each other.

Optionally, the processing apparatus may be one or more chips or one or more integrated circuits. For example, the processing apparatus may be one or more field-programmable gate arrays (field-programmable gate arrays, FPGAs), application-specific integrated circuits (application-specific integrated circuits, ASICs), system on chips (system on chips, SoCs), central processing units (central processing units, CPUs), network processors (network processors, NPs), digital signal processing circuits (digital signal processors, DSPs), micro controller units (micro controller units, MCUs), programmable logic devices (programmable logic devices, PLDs) or other integrated chips, any combination of the foregoing chips or processors, or the like.

FIG. 12 is a diagram of another structure of a first device according to an embodiment of this application. As shown in FIG. 12, an embodiment of the first device may include one or more processors 1201, a memory 1202, an input/output interface 1203, a wired or wireless network interface 1204, and a power supply 1205.

The memory 1202 may be used for temporary storage or permanent storage. Further, the processor 1201 may be configured to communicate with the memory 1202, and perform, on the first device, a series of instruction operations in the memory 1202.

In embodiments, the processor 1201 may perform an operation performed by the first device in any one of the foregoing embodiments. Details are not described herein again.

In embodiments, specific functional module division in the processor 1201 may be similar to a division manner of units such as the processing unit 1001 (and a possible transceiver unit) described in FIG. 10. Details are not described herein again.

It may be clearly understood by a person skilled in the art that, for the purpose of convenient and brief description, for a detailed working process of the foregoing system, apparatus, and unit, reference is made to a corresponding process in the foregoing method embodiments. Details are not described herein again.

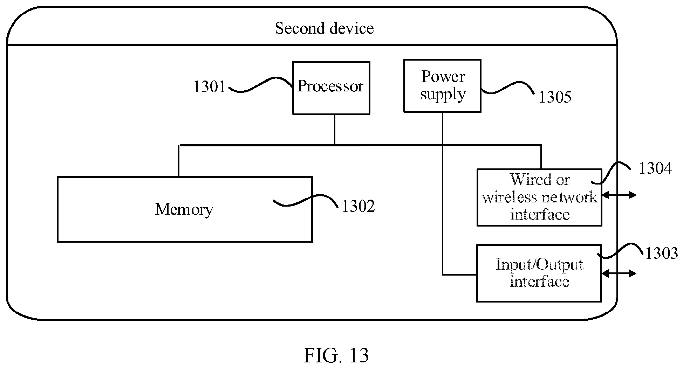

FIG. 13 is a diagram of another structure of a second device according to an embodiment of this application. As shown in FIG. 13, an embodiment of the second device may include one or more processors 1301, a memory 1302, an input/output interface 1303, a wired or wireless network interface 1304, and a power supply 1305.

The memory 1302 may be used for temporary storage or permanent storage. Further, the processor 1301 may be configured to communicate with the memory 1302, and perform, on the second device, a series of instruction operations in the memory 1302.

In embodiments, the processor 1301 may perform an operation performed by the second device in any one of the foregoing embodiments. Details are not described herein again.

In embodiments, specific functional module division in the processor 1301 may be similar to a division manner of units such as the processing unit 1001 (and a possible transceiver unit or the like) described in FIG. 10. Details are not described herein again.

It may be clearly understood by a person skilled in the art that, for the purpose of convenient and brief description, for a detailed working process of the foregoing system, apparatus, and unit, reference is made to a corresponding process in the foregoing method embodiments. Details are not described herein again.

This application further relates to a computer storage medium, including computer-readable instructions. When the computer-readable instructions are executed, a computer is enabled to implement steps performed by the first device (or the second device) in any one of the foregoing embodiments.

This application further relates to a computer program product including instructions. When the instructions are run on a computer, the computer is enabled to implement steps performed by the first device (or the second device) in any one of the foregoing embodiments.

Division into modules in this application is an example, and is merely logical function division. During actual implementation, another division manner may be used. In addition, functional modules in this application may be integrated into one processor, or may exist alone physically, or two or more modules are integrated into one module. The integrated module may be implemented in a form of hardware, or may be implemented in a form of a software functional module.

All or some of the technical solutions provided in this application may be implemented by software, hardware, firmware, or any combination thereof. When software is used to implement embodiments, all or some of embodiments may be implemented in a form of a computer program product. The computer program product includes one or more computer instructions. When the computer program instruction is loaded and executed on the computer, the procedure or functions according to embodiments of this application are all or partially generated. The computer may be a general-purpose computer, a dedicated computer, a computer network, a network device, a terminal device, or another programmable apparatus. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method examples, mutual reference can be made between functions and/or terms in apparatus examples, and mutual reference can be made between functions and/or terms in the apparatus examples and the method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An information processing method, comprising:
obtaining first information, wherein the first information indicates performance of one or more services carried on a network resource; and
determining second information based on the first information, wherein the second information indicates quality of the one or more services.

2. An information processing method, comprising:
obtaining first information and third information, wherein the first information indicates performance of one or more services carried on a network resource, and the third information indicates an intent for a network; and
determining fourth information based on the first information and the third information, wherein the fourth information indicates achievement information of the performance of the one or more services.

3. An information processing method, comprising:
obtaining fourth information, wherein the fourth information indicates achievement information of performance of one or more services carried on a network resource; and
determining fifth information based on the fourth information, wherein the fifth information indicates overall achievement information of the one or more services.

4. An information processing method, comprising:
obtaining fifth information, wherein the fifth information indicates overall achievement information of one or more services carried on a network resource; and
determining sixth information based on the fifth information, wherein the sixth information indicates overall achievement information of an intent for a network.

5. An information processing method, comprising:
obtaining sixth information, fourth information, first information, third information, and seventh information, wherein
the sixth information indicates overall achievement information of an intent for a network, the fourth information indicates achievement information of performance of one or more services, the first information indicates the performance of the one or more services carried on a network resource, the third information indicates the intent for the network, and the seventh information indicates a resource status of the network; and
determining fault information of a first service based on the sixth information, the fourth information, the first information, the third information, and the seventh information, wherein the first service is an unachieved service in the one or more services.

6. The method according to any one of claims 1 to 5, wherein the network comprises:
a first network or N subnetworks in the first network, wherein N is a positive integer.

7. The method according to claim 6, wherein the N subnetworks comprise at least one of the following:
one or more radio access network subnetworks, one or more core network subnetworks, one or more transmission network subnetworks, or one or more terminal subnetworks.

8. An information processing method, comprising:
determining a first mapping relationship, wherein the first mapping relationship indicates a mapping relationship between a fixed identifier and a temporary identifier that are of one or more services; and
determining related information about the one or more services based on the first mapping relationship.

9. The method according to claim 8, wherein the method further comprises:
receiving indication information that indicates the first mapping relationship.

10. The method according to claim 8, wherein the method further comprises:
sending eighth information, wherein the eighth information indicates the temporary identifier of the one or more services;
receiving ninth information, wherein the ninth information indicates the fixed identifier of the one or more services; and
determining the first mapping relationship based on the eighth information and the ninth information.

11. An information processing method, comprising:
determining a first mapping relationship, wherein the first mapping relationship indicates a mapping relationship between a fixed identifier and a temporary identifier that are of one or more services, and the first mapping relationship is for determining related information about the one or more services; and
sending indication information that indicates the first mapping relationship.

12. An information processing method, comprising:
receiving eighth information, wherein the eighth information indicates a temporary identifier of the one or more services; and
sending ninth information, wherein the ninth information indicates a fixed identifier of the one or more services.

13. A communication apparatus, comprising a processing unit, wherein the processing unit is configured to perform the method according to any one of claims 1 to 12.

14. A communication apparatus, comprising at least one processor and a memory, wherein the at least one processor is coupled to the memory, and the processor is configured to perform the method according to any one of claims 1 to 12.

15. A computer-readable storage medium, wherein the medium stores instructions, and when the instructions are executed by a computer, the method according to any one of claims 1 to 12 is implemented.

16. A computer program product, comprising instructions, wherein when the instructions are run on a computer, the computer is enabled to perform the method according to any one of claims 1 to 12.

17. A communication system, wherein the communication system comprises a communication apparatus configured to perform the method according to any one of claims 8 to 10 and a communication apparatus configured to perform the method according to claim 11 or 12.
